# EUROPEAN PATENT APPLICATION

(11) **EP 4 844 576 A1**
(43) Date of publication of application: **25.11.2026**
(21) Application number: 25305744.2
(22) Date of filing: 23.05.2025
(51) Int. Cl.: G06F 9/4401, G06F 9/445

(54) **MULTIPLE PROCESSOR DEVICE AND A BOOT IMAGE THEREFOR**

(71) Applicant: NXP USA, Inc., Austin, TX 78735 (US)
(72) Inventor: HAEZEBROUCK, Sebasten, 31023 Toulouse (FR); GACEV, Valentin-Adrian, 5656AG Eindhoven (NL); ZAIDI, Asim Abbas, 5656AG Eindhoven (NL)
(74) Representative: Schwarzweller, Thomas

(57) **Abstract**

A device (301) comprises a boot image (300, 400, 500), multiple processors configured to run the boot image (300, 400, 500) and a memory (330, 430, 530) coupled to multiple processors and configured to store the boot image (300, 400, 500). A plurality of the multiple processors (302) is configured to: read an entirety of the boot image (300, 400, 500); select at least one first section of the boot image that is relevant to the at least one processor (302); and discard at least one second section of the boot image that is not relevant to the at least one processor.

## Description

### Technical Field

The technical field relates to a multiple processor device and multiple processor design for a boot image and a method therefor. The technical field is applicable to, but not limited to, generating a contiguous, convoluted, secure boot (i.e., start-up) software image that contains a mix of individual and shared program images for stream transfers.

### Background

During the lifecycle of a modern embedded processor device family, it is known that there are various derivates and release versions in a processor device family. Although these processor devices are usually software compatible at operating system and user software levels, the low level software and firmware that initially starts on the device is usually specific to one processor revision, and thus is unable to be executed on other processor revisions. A start-up software program is often referred to as a boot image. Also, as the processor device family evolves, the boot image headers that contain information about the subsequent program image (e.g., processor data), as well as the boot image signatures for secure authentication, might differ from one processor version to the other, thus again not being reusable throughout the entire processor device family. It is known that sometimes, the original equipment manufacturers (OEMs) may use several processor device revisions in their production run and aim on simplifying the software update process by maintaining a unique binary file that is able to start on all of their processor devices that are deployed on field, at least those that are equipped with processors from same family.

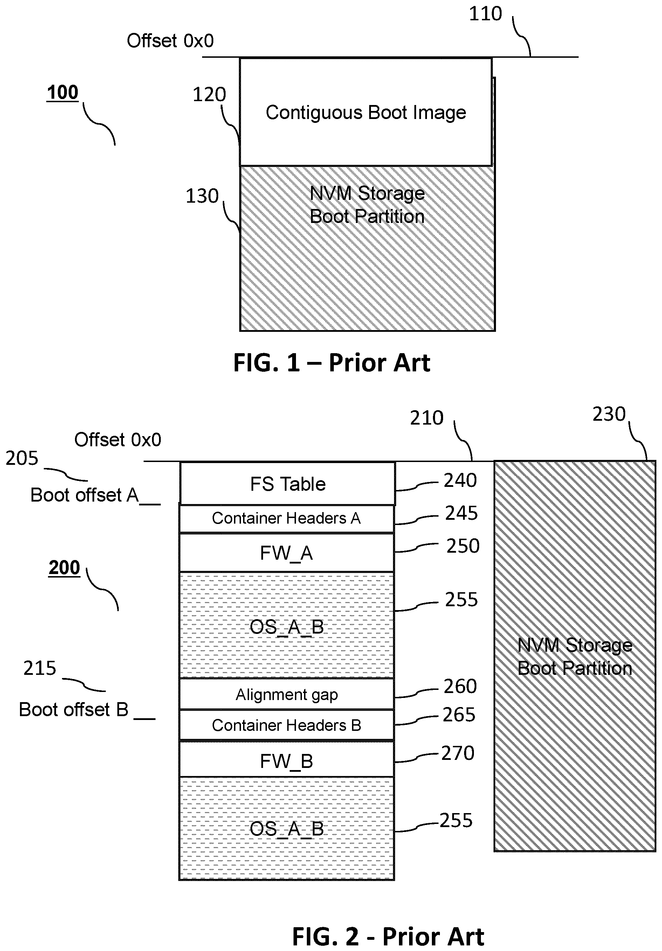

Referring now to FIG. 1, a simple high-level diagram 100 of a known boot image 120 arrangement that is contiguous and placed at the offset 0x0 110 is illustrated. It is known that as 'random' reads are not possible in this 'start-up' mode, the entire boot image will be streamed to the processor, starting from the offset 0x0 110. in this context, the expression random reads' includes read operations that allow specifying a start read addresses from a storage.

When a processor is loading its startup/boot image, say from a boot partition of non-volatile memory (NVM), such as an embedded multimedia card (eMMC), it is known that the complete eMMC is not already initialized. However, it is known that the eMMC is already capable of streaming data from the NVM boot partitions 130. Such NVM boot partitions 130 are created with a goal of supporting fast boot, before the user eMMC partition was made available. However, it is also known that these NVM boot partitions 130 have limited size. Hence, the contiguous boot image 120 might have logical gaps of useful data from the perspective of different processors. A known example of the limited size problems with NVM boot partitions 130 is illustrated in FIG. 2.

Referring now to FIG. 2, a known multiple processor boot image 200 for two processors (processor 'A' and processor 'B') is illustrated, with the multiple processor boot image 200 organized into containers, with each container having a header. The multiple processor boot image 200 is placed at an offset 0x0 210 as illustrated, with a first processor boot offset 'A' 205 being at a first offset location from the offset 0x0 210 and a second processor boot offset 'B' 215 being at a second offset location from the offset 0x0 210. Contained within the first processor boot offset 'A' 205 is a filesystem table 240, also known as a 'partition table', is a standardized table that contains information about potential filesystems located on that storage device. In the multiple processor boot image 200, and following the first processor boot offset 'A' 205, is a first container header 'A' 245 for processor 'A' and following the second processor boot offset 'B' 215 is a second container header 'B' 270 for processor 'B'.

A NVM storage boot partition 230 is included as the physical storage space. For each of the two processors, there is a specific initial boot program image, respectively marked as firmware 'A' (FW_A) 250 and firmware 'B' (FW_B) 270, sometimes referred to as initial bootloader firmware. In this context, the term 'firmware' is used as a generic term for 'small items of software' that are important for processor booting as well as providing low level services that are used by other larger and more complex items of software. A skilled artisan will appreciate that such a multiple processor boot image 200 is ideally suited for small boot images that do not significantly increase the space on the NVM storage boot partition 230 or on boot-time. It is also known that FW_A 250 and FW_B 270 may be configured as a part of their respective containers, first container header 'A' 245 and second container header 'B' 270.

Additionally, as shown, there is a large operating system image named OS_A_B 255 that is divided into two distinct areas and which must be loaded and used by respective processors, processor 'A' and processor 'B' in this example. Thus, some components such as FW_A 250 or FW_B 270 are specific to each processor, and others such OS_A_B 255 are, in this initial layout, common to both A and B, but notably duplicated. In addition, an alignment gap 260 is introduced before the second boot offset 'B' 215. Thus, FIG. 2 shows a single boot image 200 that supports multiple processors and contains FW_A 250, FW_B 270 and OS_A_B 255.

In this case FW_A 250 and FW_B 270 can be formed of a collection of one or more containers, with each container being specific to only one of the processors 'A' or 'B', e.g., container header 'A' 245 and container header 'B' 265. It is also assumed that each of the processors 'A' and 'B' may be configured to start streaming from a respective boot offset, e.g., boot offset 'A' 205 and boot offset 'B' 215. In some examples, the respective boot offsets may be specified in physical fuses (typically limited to storing a few KB of data) located inside the processor. An array of such fuses usually stores essential information to instruct the processor how to perform the startup process. As understood by a skilled person, 'fuse' technology allows programing each fuse only once (i.e., it is irreversible), and reading as many times as needed. However, as shown the memory requirement for the OS_A_B image 255 is too large for, and will not fit into, the NVM storage boot partition 230, as depicted. Furthermore, with this known model, the more processors that are supported in the combined boot image, the higher the duplication of the large image components that can be shared and thus the lower the chance to fit this known approach into a limited memory space, such as an eMMC boot partition.

However, in a data 'read' streaming mode, the data from the alignment gaps needs to be read and transferred. Furthermore, it is known that reading the data in streaming mode is usually suitable for logically contiguous images. Thus, the inventors have recognised and appreciated the constraint of not being able to fit large boot images, or allowing duplication of large boot images, into the contiguous boot image 200. Moreover, in some applications, a processor may be required to implement security policies that require the read data to be authenticated.

The goal of OEMs is to have single program images supporting multiple processors, embedded in a single boot image. Typically, OEMs impose avoiding hardware breaks within one project and therefore they ideally need identical software to run on different processors.

US10606606B1 describes a multiple processor boot image that is capable of selecting from a multiple processor firmware image only those portions targeted for its usage, and skip the other regions.

### Summary

The concepts described herein provide a multiple processor design for a boot image and method therefor, as described in the accompanying claims. Specific example embodiments are set forth in the dependent claims. These and other aspects will be apparent from, and elucidated with reference to, the example embodiments described hereinafter.

### Brief description of the drawings

Further details, aspects and example embodiments will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a known simplified high-level boot image.
FIG. 2 illustrates a more detailed known boot image arrangement that is contiguous and placed at the offset 0x0.
FIG. 3 illustrates a first example of a boot (startup) image, that manipulates header data to 'instruct' a processor into ignoring part of the following content that is for another processor, in accordance with some examples.
FIG. 4 illustrates a second example of a boot (startup) image, that manipulates header data to 'instruct' a processor into ignoring part of the following content that is for another processor, in accordance with some examples.
FIG. 5 illustrates a third example of a boot (startup) image, that manipulates header data to 'instruct' a processor into ignoring part of the following content that is for another processor, in accordance with some examples.
FIG. 6 illustrates an example flowchart of a multiple processor boot image creation process, in accordance with some examples.
FIG. 7 illustrates an example flowchart of a multiple processor usage at runtime.
FIG. 8 illustrates a typical computing system that may be employed in an electronic multiple processor device or a communication device to employ a boot (startup) image, that manipulates header data to 'instruct' a processor into ignoring part of the following content that is for another processor, in accordance with some examples.

### Detailed description

Examples described herein enable a creation of a contiguous computer startup program (boot) image to contain multiple processor program/data images and be suitable for a range of customer requirements, e.g., different versions of processors. Examples described herein enable the processors to be able to read the entire boot image and subsequently discard those aspects of the boot image that is/are not needed. Similarly, examples described herein enable the processors to be able to read the entire boot image and select sections from the boot image that are relevant for that particular processor (discarding irrelevant sections). In some examples, these sections are marked accordingly in the container headers, while the sections of the boot image that belong to other processor revisions are marked as data. At the computer startup, the sections of the boot image that belong to other processor revisions, marked as 'data', are also read from eMMC (for example in a streaming mode) and may be authenticated, if required for secure boot purposes.

In some examples, the boot image may include, for a plurality of processors or for each processor, at least one of: a different container syntax, a different firmware component size, a different layout, different container headers. Here, the term container syntax refers to the pre-defined way that the information is stored in a container. For instance, it starts with a fixed 32-bit number, followed by a 32-bit version number, followed by a header that also conforms to a pre-defined syntax, followed by some data blobs. A different syntax means that these fields were specified differently, for instance it starts with an 8-bit fixed number followed by a 16-bit version number then an 8-bit checksum and so on. However, in some instances, the sections of the boot image that belong to other processor revisions, marked as data, can also be eventually discarded. In this manner, in some examples, it is envisaged that an image section that is considered a program image for one processor may therefore be considered as just dummy data for another processor.

Furthermore, it is envisaged that shared program images (such as an OS kernel) are pointed to from several containers; therefore, they are 'shared' and do not require duplication. In this manner, examples described herein allow the same boot image to be *understood* and processed differently by different processors, which is currently not achievable with known existing methods.

Examples herein described provide a multiple processor design for a boot image and method therefor that enable using a single boot image to collect individual program/data images for at least one (and in some instances each) processor revision of the multiple processor design. In examples described herein, this is achieved by introducing a new boot image layout format and associated tools for generating the boot image layout format. In some examples, the concepts described herein may be employed in an electronic multiple processor device that includes a boot image configured to work across multiple processors working in a streaming mode. In this manner, the multiple processor design described herein is able to read a continuous stream of memory from a flash (such as an eMMC), that is (prior to the concepts described herein) unable to perform random reads or is unable to correctly distinguish and select sections of memory designated for its usage.

Examples herein described provide an approach to create a multiple processor boot image for a device (such as a computer-based device) that includes multiple processors that do not (prior to the concepts described herein) have the ability to run a boot image and firmware on multiple processors, often referred to as 'processor-independent code' or 'platform-independent code'. In this manner, it is possible to save processor-dependent boot images in a unified multiple processor image. This is different to prior-art teachings that focus on a need for processor-independent code. Additionally, provisioning a processor-independent program image (e.g., an OS kernel) that is shared across multiple processors and is to be used later in a computer startup process is encompassed in examples described herein.

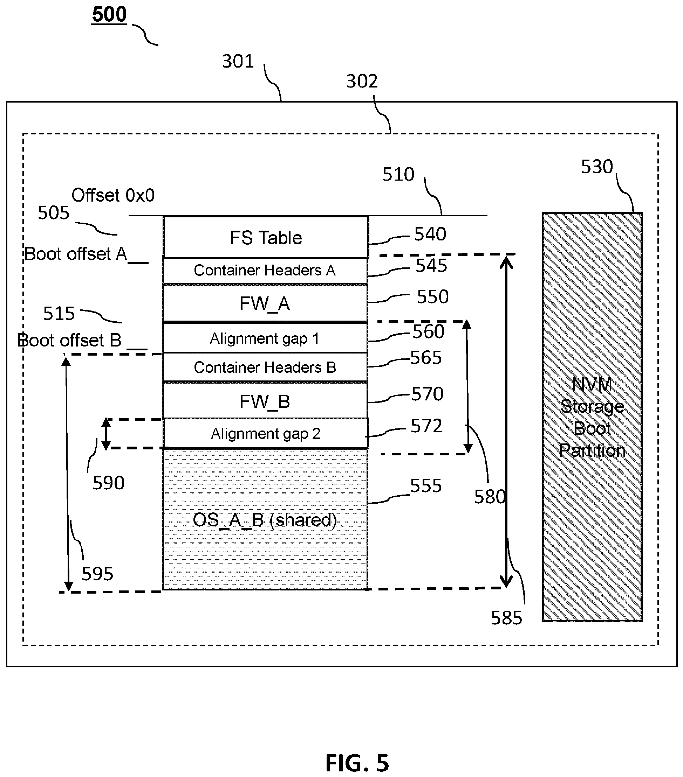

In contrast to the teaching of US10606606B1, of a multiple processor boot image that is capable of selecting from a multiple processor firmware image only those portions targeted for its specific usage, and skips (without reading) the other regions, examples herein-described create a contiguous boot partition image that contains multiple images and therefore is suitable for all the above-mentioned constraints. In particular, examples herein described assume that the processor starts to read the entire boot image from an address, for example as specified in a fuse. As such, the examples herein described provide a mechanism that does not specifically require the capability to select portions/regions assigned to a processor's usage. Furthermore, in contrast to the teaching of US10606606B1 that assumes the processor is able to perform random reads on the NVM storage, or boot partition (see 530 in Fig. 5), examples herein-described perform a stream read of contiguous data, e.g., read the entire image and discard what has been read and is not needed, as described below.

In some examples, it is envisaged that an image portion/region that is considered a program image for one processor may be considered just dummy data for the other processor that reads the image data. Shared program images, such as an operating system (OS) Kernel, may be pointed to from several containers. Consequently, in this scenario, the images are shared and do not require duplication.

Although examples are described with regard to use in a streaming mode, it is envisaged that the concepts described are not limited to a streaming mode use and that the concepts may be generally applied to other scenarios, for example where the same image layout may be used for boot modes other than streaming boot modes, for example where sequential reads are allowed, such as booting from serial NOR logic gates, parallel NOR logic gates, Peripheral Component Interconnect Express (PCle). In this case, unlike in a streaming mode, the processor has the ability to perform random reads and thus it can selectively access only data that it needs. Notably, in this example, the image layout and the process of the image creation does not need to be modified. Thus, it is envisaged that the boot image concepts described herein are not limited to being used in a streaming mode and can also be used in boot modes other than streaming boot modes without requiring changes.

As will be appreciated by skilled artisans, the ability to generate computer boot images containing a mix of individual and shared program images specific to several processors respectively common to some processors provides a significant benefit over known arrangements. Although examples are described with reference to computers/processors using a data streaming mode to read their boot images from an external storage, it is envisaged that the concepts described herein are equally applicable to state of the art security requirements with regards to image authentication.

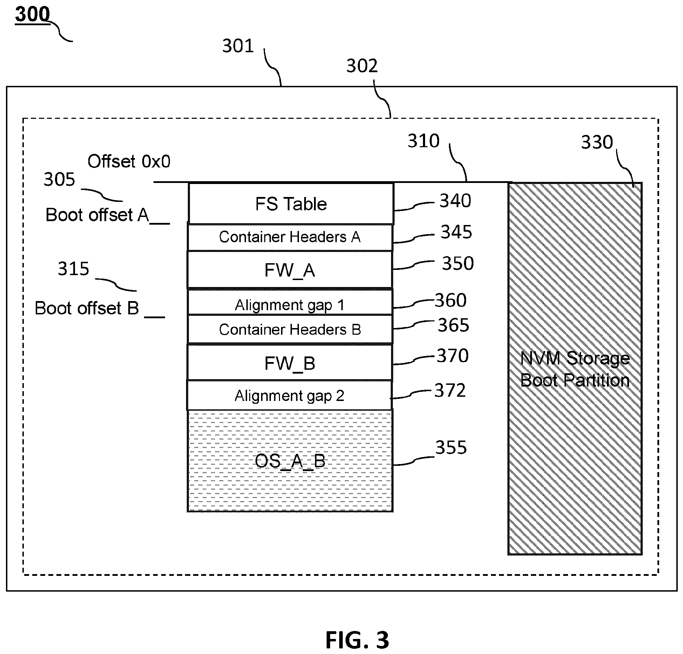

In some examples, memory savings may be made using a convoluted (e.g., efficient boot) image layout is used by concatenating and combining two different containers that allows for storing, only once, the files that are common for multiple processors, thereby reducing the overall multiple processor boot image size (see, for example, the OS_A_B in FIG. 2 is duplicated and therefore occupies twice the space compared to the shared program image, i.e., shared OS_A_B in FIG. 3). This benefit is particularly useful for users/customers trying to fit a complete boot image including a large OS Kernel, e.g., OS_A_B 355 in FIG. 3 (of say 20 MB Linux) in a space-limited eMMC boot partition (e.g. 32 MB).

In some examples, customer development time may be saved, as software teams performing common software development, such as at operating system and application level, can be enabled with a multiple processor boot image as described herein, thereby able to develop their software independent of a particular hardware platform. Thus, the particular hardware revision may become irrelevant at this development phase. Therefore, early software development on a first tranche of processor devices may encompass certain software layer deployments on later platforms, thereby reducing the overall development time. Furthermore, hardware teams may now use a single multiple processor boot image to perform the hardware validation.

In some examples, software maintenance may also be improved, for example from an OEM perspective there is now a single boot image for all device processor variants. This may reduce the logistic maintenance complexity. Furthermore, over-the-air (OTA) and garage software updates may now be performed with a single boot image, regardless of the processor versions, say, used in a vehicle.

In some examples, the boot image includes large components that are binary compatible, in that they may be used, as is, by multiple processors that share memory space, i.e., the large image components, e.g., OS_A_B, that can be shared and thereby reduce the overall memory space required on the NVM storage.

Referring now to FIG. 3, a first example of a multiple processor boot image 300 is illustrated, where the multiple processor boot image 300 contains two boot images, a first boot image being Container headers A + FW_A, and a second boot image being Container headers B + FW_B. The multiple processor boot image 300 is illustrated within one processor 302 of an electronic device 301 that comprises multiple processors, with only one processor 302 shown for simplicity purposes only. Here, the boot image 300 manipulates header data configured to 'instruct' a processor into ignoring part of the following content that is for another processor, in accordance with some examples. For example, the data in some addresses are read and subsequently used and the data in some other addresses are discarded after reading, as the streaming mode requires reading an entirety of the data, but only some data is relevant for that processor. Thus, to identify the non-relevant data, header data is 'manipulated to add headers that tell the processor that the data will not be used after it was read, whereas for the other processors the same data may indeed be relevant and, in this case, it will be marked accordingly in the header corresponding to that processor. Thus, in contrast to the known approach where data is skipped and not read, examples herein described read an entirety of the data (as 'skip' is not possible). The read data, if required, is also authenticated, or if not required the read data will be discarded.

As illustrated in FIG. 2, some components such as FW_A 250 or FW_B 270 are specific to each processor, and others such OS_A_B 255 are, in this initial layout, common to both A and B, but notably duplicated. However, in examples described herein, such as the layout of the first example of a multiple processor boot image 300, the specific images are preserved and only one instance of the common, shared components is needed.

Although the multiple processor boot image 300 is illustrated with two processors (processor 'A' and processor 'B') it is envisaged that the concepts herein-described apply with any number of processors. The multiple processor boot image 300 is organized into containers, with each container having a header. The multiple processor boot image 300 is placed at an offset 0x0 310 as illustrated, with a first processor boot offset 'A' 305 being at a first offset location from the offset 0x0 310 and a second processor boot offset 'B' 315 being at a second offset location from the offset 0x0 310. Contained from offset 0x0 and ending before the first processor boot offset 'A' 305 is a Filesystem table 340.

Following the first processor boot offset 'A' 305 is a first container header 'A' 345 intended for processor 'A' and following the second processor boot offset 'B' 315 is a second container header 'B' 365 intended for processor 'B'. A memory, such as a NVM storage boot partition 330, i.e., the physical storage where the boot image is stored, is included. For each of the illustrated two processors, there is a specific initial boot program image, respectively marked as firmware 'A' (FW_A) 350 and firmware 'B' (FW_B) 370, sometimes referred to as initial bootloader firmware. In this context, the term 'firmware' is used as a generic term for 'small items of software' that are important for processor booting and provide low level services that are used by other larger and more complex items of software. A skilled artisan will appreciate herein that the boot image includes all data that is used for a boot operation. In the described examples, this includes the container headers, boot program image, alignment gaps. From that, the boot program image is the first computer program that runs on the processor when it is booted (or started), labelled as FW_A 350 or FW_B 370. Such a multiple processor boot image 300 is applicable for small boot images that do not significantly increase the space on the NV memory or on boot-time. In some examples, FW_A 350 and FW_B 370 may be configured as a part of their respective containers, first container header 'A' 345 and second container header 'B' 365.

Additionally, as shown, there is one large operating system image named OS_A_B 355, which must be loaded and shared by both processors, processor 'A' and processor 'B' in this example. In addition, an alignment gap 360 is introduced before the second boot offset 'B' 315. One aim in this example is to create a single boot image 300 that contains FW_A 350, FW_B 370 and OS_A_B 355.

In this case FW_A 350 and FW_B 370 may be formed of a collection of one or more containers, with each container being specific to only one of the processors 'A' or 'B', e.g., container header 'A' 345 and container header 'B' 365. It is also assumed that each of the processors 'A' and 'B' may be configured to start streaming from a respective boot offset, e.g., boot offset 'A' 305 and boot offset 'B' 315. In some examples, the boot offset may form part of the 'fuses', which are some very limited non-volatile memory (NVM) space that the processors have inside and they usually carry information used in the processor boot process. Some other processors read this information from other sources, such as very small external memories named external electrically erasable programmable read-only memory (EEPROM), which may also be also used to store this offset information. However, as the large image components are shared, a limited memory space can be tolerated, such as an eMMC boot partition.

In accordance with examples described herein, the header data is configured to 'instruct' a processor to read, potentially authenticate if required, but later not use part of the following content that is intended for another processor.

in FIG. 2 there is a clear separation in the boot image 200, as one image starts at boot offset 'A' 205 and the other image starts at boot offset 'B' 215. Hence, there is no overlap of these images. Compared to the boot image 200 of FIG. 2, the presented layout in FIG. 3 provides images for processor 'A' and processor 'B' that overlap. Hence, the layout in FIG. 3 is efficient in that the boot layout mixes the components, i.e., container header A 345, FW_A 350, container header B 365, FW_B 370, for each of processor 'A' and processor 'B' as well as a shared operating system image named OS_A_B 355 located at the end of the boot image 300. Thus, in this manner, the parts of the boot image 300 that overlap have different significance for each processor, and thus they are marked differently in the headers. After reading the boot image, processor 'A' needs to discard the non-relevant components, boot e.g., the components relevant to, and belonging to, processor 'B'.

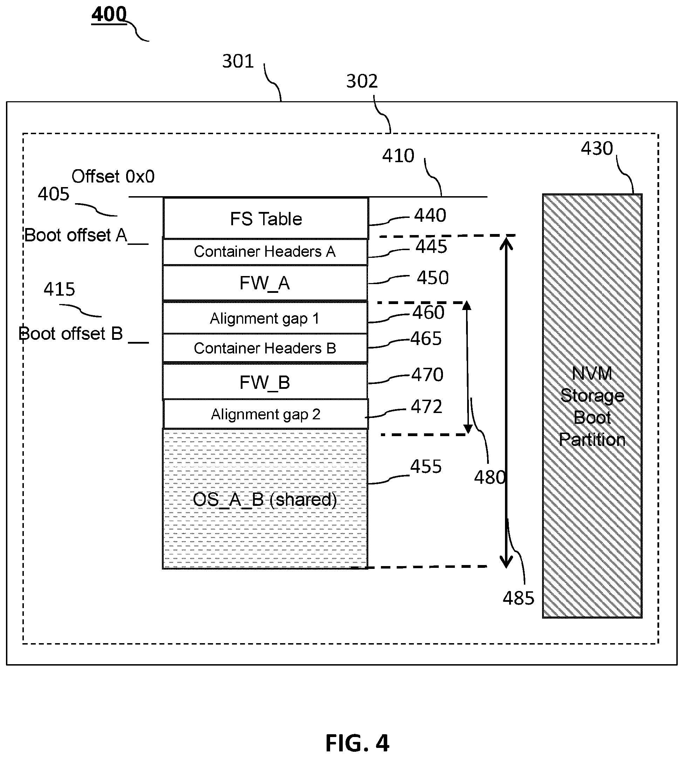

Referring now to FIG. 4, a second example of a boot (startup) image 400 is illustrated, that manipulates header data to 'instruct' a processor into ignoring part of the following content that is for another processor, in accordance with some examples. The second example of a boot (startup) image 400 is illustrated within one processor 302 of an electronic device 301 that comprises multiple processors, with only one processor 302 shown for simplicity purposes only. Again, the multiple processor boot image 400 is organized into containers, with each container having a header. The multiple processor boot image 400 is placed at an offset 0x0 410 as illustrated, with a first processor boot offset 'A' 405 being at a first offset location from the offset 0x0 410 and a second processor boot offset 'B' 415 being at a second offset location from the offset 0x0 410. Contained within the first processor boot offset 'A' 405 is a filesystem table 440.

Following the FS table 440 and starting at the first processor boot offset 'A' 405, is a processor 'A' boot container 485. The processor 'A' boot container 485 encompasses a first container header 'A' 445 for processor 'A' and following the second processor boot offset 'B' 415 encompasses a second container header 'B' 465 for processor 'B'. A memory, such as a NVM storage boot partition, 430 is included. For each of the illustrated two processors, and contained within processor 'A' boot container 485, there is a specific initial boot program image, respectively marked as firmware 'A' (FW_A) 450 and firmware 'B' (FW_B) 470, sometimes referred to as initial bootloader firmware. In some examples, FW_A 450 and FW_B 470 may be configured as a part of their respective containers, first container header 'A' 445 and second container header 'B' 465. Additionally, as shown, there is one large 'shared' operating system image named OS_A_B 455, which is loaded and used by both processors, processor 'A' and processor 'B' in this example. In the context of the examples described herein, the term 'shared' encompasses shared program images of all processors that are able to use the shared progam image, such as an OS kernel. In this example, the OS_A_B 455 is a computer program that both processors will eventually execute. In addition, a first alignment gap 460 is introduced before the second boot offset 'B' 415, again forming a part of processor 'A' boot container 485. One aim in this example is to create a single boot image 400 that contains FW_A 450, FW_B 470 and shared OS_A_B 455.

As can be seen in FIG. 4, for processor A, the components labelled Container Header A, FW_A and OS_A_B are relevant. For processor B the components labelled Container Header B, FW_B and OS_A_B are relevant. In this case FW_A 450 and FW_B 470 may be formed of a collection of one or more containers, with each container being specific to only one of the processors 'A' or 'B', e.g., container header 'A' 445 and container header 'B' 465. The container headers 445, 465 may include information about each section in the container that allows the respective processor read only memory (ROM) code to be able to identify what in the container is a program image and what is a data image. It is also assumed that each of the processors 'A' and 'B' may be configured to start streaming and discard everything until the respective boot offset, e.g., boot offset 'A' 405 and boot offset 'B' 415. As indicated previously, processor B knows that it needs to use boot offset B 415, as the respective boot offsets may be specified in fuses or in small external electrically erasable programmable read-only memory (EEPROM). However, as the large image components are shared, a limited memory space can be tolerated, such as an eMMC boot partition.

Thus, the sections of the boot image 400 for multiple processors are embedded with one or more sections being non-relevant for one or more processors in the boot image 400. As will be appreciated by a skilled artisan, it is envisaged that the concept described herein may be scaled to multiple processors and to multiple containers for each processors, in that in this example there is only one container per processor, whereas there are some systems that use multiple containers in the boot process that may benefit from the concepts described herein. In other examples, there is a 1-1-1 relationship between processor-container-container header, where container headers provide a layout of the subsequent binary data, i.e., the container content. Examples described herein propose manipulation of the container header data to "instruct" a particular processor (e.g., processor 'A' or processor 'B') into ignoring part of the following content that is for another/the other processor.

When a processor is operating in a streaming mode, the streaming mode doesn't allow 'jumps' in read operations. In this example, the processor 'A' needs to stream all of the sections, i.e., Container Header A 445, FW_A 450, Alignment gap 1 460, Container Header B 465, FW_B 470, Alignment gap 2 472 and shared OS_A_B 455. In particular, in this illustrated example, a processor 'A' data section 480 is arranged to encompass Alignment gap 1 460, Container Header B 465, FW_B 470 and Alignment gap 2 472. However, after processing these sections, processor 'A' identifies that the alignment gaps 460, 472, Container Header B 465 and FW_B 470 are not relevant for processor 'A', despite needing to be streamed when streaming mode is used and authenticated when a secure boot process is required. In some examples, this may be achieved by embedding these sections as data sections in the Container Header 'A'. Similarly, the Alignment gap 2 can be treated as data section for the Processor 'B'. Once processed/streamed, the irrelevant data from these sections may be discarded.

Alignment gaps, which are typically less than 2 Mbytes, are needed in order to allow fluctuation in the FW component's size and do not affect the overall layout. In some examples, alignment gaps may also be provisioned as data sections.

FIG. 5 illustrates a third example of a multiple processor boot (startup) image 500, that manipulates header data to 'instruct' a processor into ignoring part of the following content that is for another processor, in accordance with some examples. The third example of a boot (startup) image 500 is illustrated within one processor 302 of an electronic device 301 that comprises multiple processors, with only one processor 302 shown for simplicity purposes only. The multiple processor boot image 500 is placed at an offset 0x0 510 as illustrated, with a first processor boot offset 'A' 505 being at a first offset location from the offset 0x0 510 and a second processor boot offset 'B' 515 being at a second offset location from the offset 0x0 510. Contained within the first processor boot offset 'A' 505 is a filesystem table 540.

Following the FS table 540 and starting at the first processor boot offset 'A' 505, is a processor 'A' boot container 585, which is read by processor 'A' and processor 'B'. The processor 'A' boot container 585 encompasses a first container header 'A' 545 for processor 'A' and following the second processor boot offset 'B' 515 encompasses a second container header 'B' 565 for processor 'B'. The container headers 545, 565 may include information about each section in the container that allows the respective processor read only memory (ROM) code to be able to identify what in the container is a program image and what is a data image. A memory, such as a (physical) NVM storage boot partition 530 is included. For each of the illustrated two processors, and contained within processor 'A' boot container 585, there is a specific initial boot program image, respectively marked as firmware 'A' (FW_A) 550 and firmware 'B' (FW_B) 570, sometimes referred to as initial bootloader firmware. In some examples, FW_A 550 and FW_B 570 may be configured as a part of their respective containers, first container header 'A' 545 and second container header 'B' 565. Additionally, as shown, there is one large 'shared' operating system (OS) image named OS_A_B 555, which must be loaded and used by both processors, processor 'A' and processor 'B' in this example. In the context of the examples described herein, the term 'shared' encompasses all processors that are able to use the shared program image. In this example, the OS_A_B 455 is a computer program that both processors will eventually execute. In addition, a first alignment gap 560 is introduced before the second boot offset 'B' 515, again forming a part of processor 'A' boot container 585. One aim in this example is to create a single boot image 500 that contains FW_A 550, FW_B 570 and OS_A_B 555.

As can be seen in FIG. 5, for processor A, processor A Boot Container (including container header 'A' 545, FW_A 550 and Alignment gap 1 560) is what processor 'A' will read from NVM 530. Thus, the components labelled Container Header A, FW_A and OS_A_B are relevant. Thus, the processor 'A' Data Section 580 (including alignment gap 1 560, container header B 565, FW_B 570 and alignment gap 2 572) is what Processor 'A' will eventually discard, albeit that some of these concepts are relevant to and used by processor B.

Thus, for processor B the components labelled Container Header B 565, FW_B 570 and shared OS_A_B 555 are relevant. As shown, processor 'B' boot container 595 encompasses Container Header B 565, FW_B 570, alignment gap 2 572 and shared OS_A_B 555. In this case FW_A 550 and FW_B 570 may be formed of a collection of one or more containers, with each container being specific to only one of the processors 'A' or 'B', e.g., container header 'A' 545 and container header 'B' 565. It is also assumed that each of the processors 'A' and 'B' may be configured to start streaming from a respective boot offset, e.g., boot offset 'A' 505 or boot offset 'B' 515. As indicated previously, processor B knows that it needs to use and start reading at boot offset 'B' 415, as the respective boot offsets may be specified in fuses or in small external electrically erasable programmable read-only memory (EEPROM). However, as the large image components are shared, a limited memory space can be tolerated, such as an eMMC boot partition.

Thus, the sections of the boot image 500 for multiple processors are embedded with one or more sections being non-relevant for one or more processors in the boot image 500. As will be appreciated by a skilled artisan, the concept described herein may be scaled to multiple processors and to multiple containers for each processor of the plurality of processors. In other examples, there is a 1-1-1 relationship between processor-container-container header, where container headers provide a layout of the subsequent binary data, i.e., the container content. Examples described herein propose manipulation of the container header data to "instruct" a particular processor (e.g., processor 'A' or processor 'B') into ignoring part of the following content that is for another/the other processor.

When a processor is operating in a streaming mode, the streaming mode doesn't allow 'jumps' in read operations. In this example, the processor 'A' needs to stream all of the sections, i.e., Container Header A 545, FW_A 550, Alignment gap 1 560, Container Header B 565, FW_B 570, Alignment gap 2 572 and shared OS_A_B 555. In particular, in this illustrated example, a processor 'A' data section 580 is arranged to encompass Alignment gap 1 560, Container Header B 565, FW_B 570 and Alignment gap 2 572. However, after processing these sections, processor 'A' identifies that the alignment gaps 560, 572, Container Header B 565 and FW_B 570 are not relevant for processor 'A', despite needing to be streamed when streaming mode is used and authenticated when a secure boot process is required. In particular, in this illustrated example, a processor 'B' data section 590 is solely located within Alignment gap 2 572 and is deemed sufficient for the data for processor 'B'. However, the data for processor 'A' is deemed as needing 560-572. Therefore, shared data between processor 'A' and 'B' is contained within alignment gap 2 572. These shared 'data' sections are what the processors read, authenticate and eventually not use (discard). Given the fact that the images for processor 'A' and 'B' are mixed together, provides the resulting boot image 500 layout, where all the sections for processor 'B' are also streamed by processor 'A'.

In this example, alignment gaps 560, 572 are used in order to allow fluctuation in the FW component's size, thereby not affecting the overall boot layout. The alignment gaps 560, 572 are also provisioned as data sections 580, 590, as shown. Alternatively, in other examples, processor data sections may be achieved by embedding these sections as data sections in the Container Header 'A', which may include information about each section in the container for Processor 'A'. This way the Processor 'A' read only memory (ROM) code can identify (only for Processor 'A') what in the container is a program image and what is a data image, and a similar approach applies for processor B and any other further processor. Once processed/streamed, the irrelevant data from these sections may be discarded.

The Data Section 580 is not relevant for processor A, as it includes information only relevant to Processor B. Nevertheless, in a streaming mode application, Data Section 580 needs to be loaded anyway by Processor 'A' from the NVM storage 530, and then it can be subsequently discarded. In the examples described herein, after 580, the shared operating system OS_A_B 555 is located, which Processor A needs. Therefore, in order to read an entirety of its necessary images, processor A starts reading from Boot Offset A 505 and reads until the end of shared operating system OS_A_B 555. With a streaming mode application Processor A reads the boot image 500 continuously, and it cannot skip Data Section 580. Therefore, the Data Section 580 is specifically marked in a special way for processor A as a data section that can be later discarded.

The software tools associated with the examples described herein are enhanced scripts capable of creating efficient boot layout images according to the new format introduced through this invention. The scripts also take care also of reserving the alignment gaps, about signing the sections part of each container and concatenating all sections in a single image. The script is aware that different processors supported in the efficient boot image require different formats of the container header and generate these headers accordingly. Below the flows associated to creating the image.

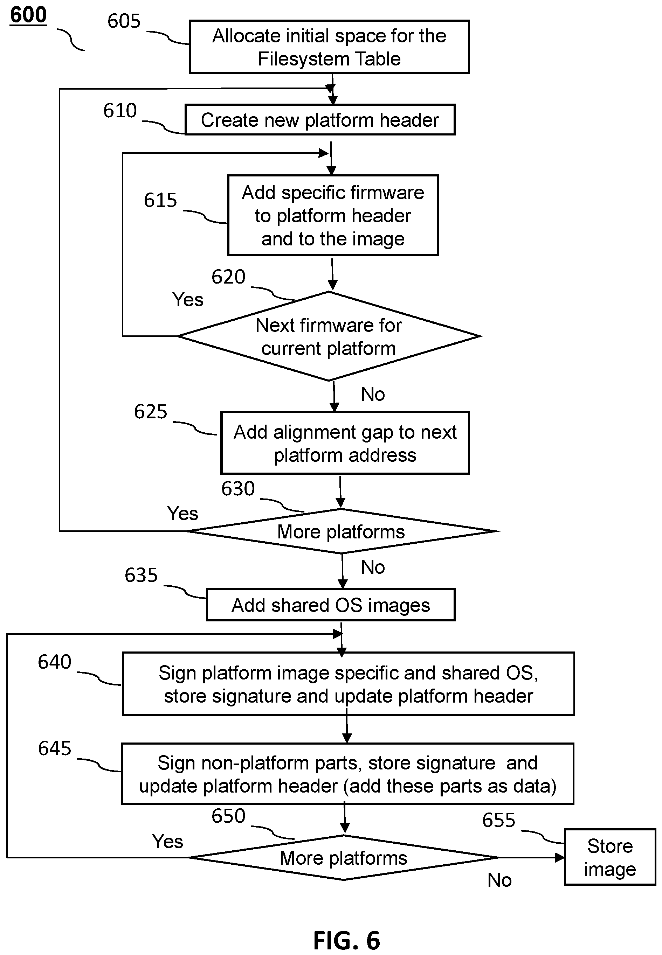

Referring now to FIG. 6, an example flowchart of a multiple processor boot image creation process 600 is illustrated, in accordance with some examples. At 605, initial space in the (NV) memory is allocated for the Filesystem Table. At 610, a new processor header is created. At 615, specific firmware is added to the processor header and to the image. Using the notations from FIG. 3, FIG. 4 and FIG. 5, this specific firmware is FW_A then FW_B. Initially the image for processor A is being added. Thus, the first pass on 615 adds FW_A. There is no additional firmware for processor A. Therefore, at 630, a query as to whether there are 'more processors' is reached. In the aforementioned examples, there is one more processor, i.e., processor B, so the flowchart loops back to 610. Then in 615 the FW_B is added. At 620, a determination is made as to whether (or not) more firmware is needed for the currently assessed processor. In the previous examples this is not the case, because each processor of a plurality of processors has only one firmware, these being FW_A, FW_B. However, in alternative examples and assuming that processor A has two firmware, say FW_A_1 and FW_A_2, at 615 a first specific firmware would be added, e.g., FW_A_1, then at 620 next firmware FW_A_2 is added. If, at 620, no more firmware is needed for the current processor, the flowchart moves to 625. At 625, an alignment gap is added to the next processor address, in accordance with the boot images of FIG. 3, FIG. 4 or FIG. 5. At 630, a determination is made as to whether (or not) there are more processors. If at 630 there are more processors, the flowchart loops back to 610. If at 630 there are no more processors, the flowchart move to 635. At 635, shared OS images are added. At 640, the specific processor image and shared OS are signed, and the signature stored and the processor header updated. At 645, a container header of at least one processor is updated and parts that are not relevant to the specific processor (referred to as non-processor parts) are added as data. The non-processor parts including a processor container header are also signed and authenticated as a security feature to ensure malicious entities do not load malware or other firmware that could damage the device. At 650, a determination is made as to whether (or not) there are more processors. If, at 650, there are more processors, then the flowchart loops back to 640. If, at 650, there are no more processors, then the image is stored at 655. In this manner, the boot image creation transitions through each processor first (adding headers and alignment gaps) and then provides signatures to each to 'authenticate' them, i.e., loop 630 to 610 followed by 635 of the flowchart brings all the data together in the contiguous image; and loop 650 to 640 iterates through the elements of this image, provides their signatures and performs the updates in the headers accordingly.

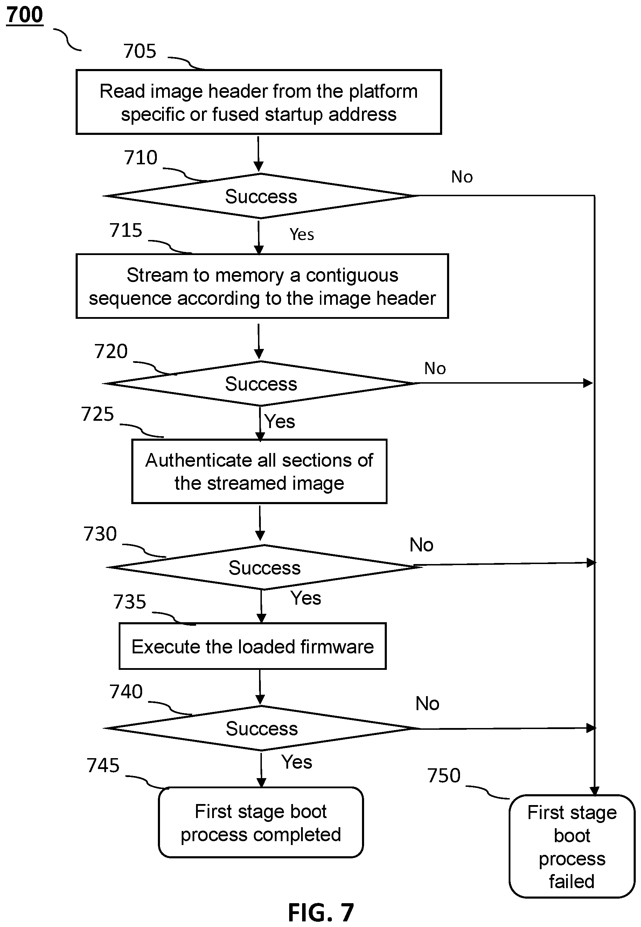

Referring now to FIG. 7, an example flowchart performed by one or a plurality or each processor of multiple processors at runtime 700 (i.e., at boot (startup)) is illustrated. At 705 an image header is read from the processor-specific address or a fused-startup address. At 710, a determination is made as to whether (or not) the read of the image header was a success. If, at 710, the read of the image header was not a success, the first stage boot process is identified as having failed at 750. If, at 710, the read of the image header was a success, the flowchart moves to 715. At 715, the processor loads the firmware from an NVM as part of the entire contiguous image. Here, at 715 in a streaming mode application, a contiguous sequence of several components is streamed to memory according to the image header, wherein the contiguous sequence of several components comprises components such as FW_A, alignment gap 1, etc. At 720, a determination is made as to whether (or not) the firmware from the NVM has been successfully loaded, e.g., the stream to memory of a contiguous sequence streamed to memory according to the image header was a success. If, at 720, the firmware from the NVM has been successfully loaded (e.g., the stream to memory of a contiguous sequence streamed to memory) according to the image header was not a success, the first stage boot process is identified as having failed at 750. If, at 720, the firmware from the NVM has been successfully loaded (e.g., the stream to memory of a contiguous sequence streamed to memory) according to the image header was a success, the flowchart moves to 725.

At 725, all sections of the firmware, e.g., streamed image, are authenticated. For example, each of the contiguous sequence of several components can be authenticated at the image creation operation at 640, 645 in FIG. 6, and as consequence authenticated by the processor at 725. At 730, a determination is made as to whether (or not) all sections of the firmware, e.g., streamed image, being authenticated was a success. If, at 730, all sections of the firmware, e.g., streamed image, being authenticated was not a success, the first stage boot process is identified as having failed at 750. If, at 730, all sections of the streamed image being authenticated was a success, the flowchart moves to 735. At 735, the loaded firmware is executed. At 740, a determination is made, usually implemented by processors, as to whether (or not) the loaded firmware has been executed successfully. If, at 740, the loaded firmware has not been executed successfully, the first stage boot process is identified as having failed at 750. If, at 740, it is determined that the loaded firmware has been executed successfully, the flowchart moves to 745. At 745 the first stage boot process is identified as having been completed.

Although the example flowchart in FIG. 7 illustrates a startup process that encompasses several checkpoints that may indicate a lack of success, such as a correct header image being identified, reading the data from the NV storage succeeded, data was properly authenticated, etc., it is envisaged that in a complex computer system there might be other such checkpoints that may be used in the example flowchart of FIG. 7. In this manner, it is envisaged that any failure may break the normal flow and will trigger a failure handler. For example, a typical system-on-chip (SoC) boot image flow has multiple checkpoints where a failure may halt the boot process and tigger a failure. Depending on the processor specification following a failure identification, it is envisaged that there may be re-attempt of starting the same image, or starting a secondary image, using a different boot media, or alternatively, simply shutting down the SoC/processor/computer device. In some examples, it is envisaged that some SoC boot flows may support a retry mechanism, for example after a failed boot attempt or shutdown of the processor.

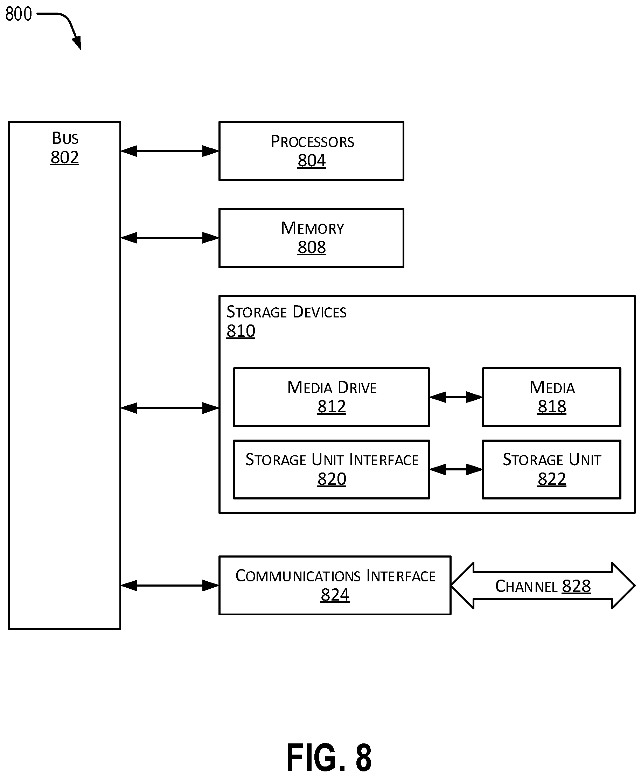

Referring now to FIG. 8, there is illustrated a typical computing system 800 that may be employed in an electronic multiple processor device or a communication device to employ a boot (startup) image, that manipulates header data to 'instruct' a processor into ignoring part of the following content that is for another processor, according to some examples.

Computing systems of this type may be used in communication devices. Those skilled in the relevant art will also recognize how to implement the invention using other computer systems or architectures. Computing system 800 may represent, for example, a desktop, laptop or notebook computer, hand-held computing device (cell phone, laptop, etc.), mainframe, server, client, or any other type of special or general-purpose computing device as may be desirable or appropriate for a given application or environment. Computing system 800 includes multiple processors 804, such as multiple instances of processor 302 in FIG's 3-5. The multiple processors 804 can be implemented using a general or special-purpose processing engine such as, for example, a microprocessor, microcontroller or other control logic. In this example, multiple processors 804 are connected to a bus 802 or other communication medium. In some examples, computing system 800 may be a non-transitory tangible computer program product comprising executable code stored therein for employing a boot (startup) image, that manipulates header data to 'instruct' a processor into ignoring part of the following content that is for another processor.

Computing system 800 can also include a main memory 808, such as random access memory (RAM) or other dynamic memory, for storing information and instructions to be executed by multiple processors 804. Main memory 808 also may be used for storing temporary variables or other intermediate information during execution of instructions to be executed by multiple processors 804, in particular execution of the boot image as described with reference to any of FIG's 3-7. Computing system 800 may likewise include a read only memory (ROM) or other static storage device coupled to bus 802 for storing static information and instructions for the multiple processors 804.

The computing system 800 may also include information storage system 810, which may include, for example, a media drive 812 and a removable storage interface 820. The media drive 812 may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media 818 may include, for example, a hard disk, floppy disk, magnetic tape, optical disk, CD or DVD, or other fixed or removable medium that is read by and written to by media drive 812. As these examples illustrate, the storage media 818 may include a computer-readable storage medium having particular computer software or data stored therein.

In alternative embodiments, information storage system 810 may include other similar components for allowing computer programs or other instructions or data to be loaded into computing system 800. Such components may include, for example, a removable storage unit 822 and an interface 820, such as a program cartridge and cartridge interface, a removable memory (for example, a flash memory or other removable memory module) and memory slot, and other removable storage units 822 and interfaces 820 that allow software and data to be transferred from the removable storage unit 818 to computing system 800.

Computing system 800 can also include a communications interface 824. Communications interface 824 can be used to allow software and data to be transferred between computing system 800 and external devices. Examples of communications interface 824 can include a modem, a network interface (such as an Ethernet or other NIC card), a communications port (such as for example, a universal serial bus (USB) port), a PCMCIA slot and card, etc. Software and data transferred via communications interface 824 are in the form of signals which can be electronic, electromagnetic, and optical or other signals capable of being received by communications interface 824. These signals are provided to communications interface 824 via a channel 828. This channel 828 may carry signals and may be implemented using a wireless medium, wire or cable, fibre optics, or other communications medium. Some examples of a channel include a phone line, a cellular phone link, an RF link, a network interface, a local or wide area network, and other communications channels.

In this document, the terms 'computer program product', 'computer-readable medium' and the like may be used generally to refer to media such as, for example, memory 808, storage device 818, or storage unit 822. These and other forms of computer-readable media may store at least one instruction for use by the multiple processors 804, to cause the processor to perform specified operations. Such instructions, generally referred to as 'computer program code' (which may be grouped in the form of computer programs or other groupings), when executed, enable the computing system 800 to perform functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 800 using, for example, removable storage drive 822, drive 812 or communications interface 824. The control logic (in this example, software instructions or computer program code), when executed by the multiple processors 804, causes the multiple processors 804 to perform the functions/operations as described herein.

A skilled artisan will appreciate that the level of integration of circuits or components may be, in some instances, implementation-dependent. Clearly, the various circuits or components can be realized in discrete or integrated component form, with an ultimate structure therefore being an application-specific or design selection. It is envisaged that the concepts described herein may be applied to any SoC and any embedded processor.

Because the illustrated example embodiments may, for the most part, be implemented using electronic components and circuits known to those skilled in the art, details have not been explained in any greater extent than that considered necessary, as illustrated below, for the understanding and appreciation of the underlying concepts herein described and in order not to obfuscate or distract from the teachings presented.

In the foregoing specification, the examples have been described with reference to specific embodiments. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or electronic multiple processor devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Those skilled in the art will recognize that the architectures depicted herein are merely exemplary, and that in fact many other architectures can be implemented which achieve the same functionality. Any arrangement of components to achieve the same functionality is effectively 'associated' such that the desired functionality is achieved. Hence, any two components herein combined to achieve a particular functionality can be seen as associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also for example, in one embodiment, the illustrated examples may be implemented as circuitry located on a single integrated circuit or within a same device. Alternatively, the circuit and/or component examples may be implemented as any number of separate integrated circuits or separate devices interconnected with each other in a suitable manner. Also, for example, the examples described herein, or portions thereof, may implemented as soft or code representations of physical circuitry or of logical representations convertible into physical circuitry, such as in a hardware description language of any appropriate type.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

### Glossary

'binary blob': technical term for "unstructured and un-parsable binary data". For example, for processor A, the Container Header B and FW_B sections are examples of such data in that they have no meaning for processor A. Hence, for processor A, they will be replaced by "binary data".
program image': compiled executable, this is the software that will be started by ROM code and run on the processor
'data image': non-executable section, that can contain different types of assets that the program image is using during its execution but can also contain dummy data (i.e., for the purpose of filling a gap).
'image section': this is one logical component of an image. Images (see above) can contain multiple sections.
'container': this is a collection of sections whose locations and typed are specified in the container header'.
alignment gaps': this is a space introduced after one section to allow next section starting at a desired offset in the image (usually this is a round number).
'signing': this is a process of making a binary blob trusted by adding a signature to it. The signature is usually performed with a private key. The corresponding process on the end device is called authentication, which is performed with the public key, corresponding to the private key mentioned above. Signing can be also performed with other methods or type of keys.
'single image': in the context of examples described herein, this refers to a collection of all containers for all processors that can use this image.

## Claims

1. A device (301) comprises:
a boot image (300, 400, 500);
multiple processors (302) configured to run the boot image (300, 400, 500);
a memory (330, 430, 530) coupled to the multiple processors and configured to store the boot image (300, 400, 500);
wherein at least one processor (302) of the multiple processors is configured to:
read an entirety of the boot image (300, 400, 500);
select at least one first section of the boot image that is relevant to the at least one processor; and
discard at least one second section of the boot image that is not relevant to the at least one processor.

2. The device of Claim 1, wherein the boot image comprises at least one program image that is shared between the multiple processors.

3. The device of Claim 1 or Claim 2, wherein the boot image comprises at least one operating system (355, 455, 555) that is shared between the multiple processors.

4. The device of Claim 2 or Claim 3, wherein the boot image comprises a container header allocated for the multiple processors and configured to:
identify the at least one first section of the boot image according to a revision of the at least one processor; and
provide in the at least one second section of the boot image a layout of subsequent binary data.

5. The device of any of preceding Claims 2 to 4, wherein the boot image comprises, for the multiple processors, at least one of: a different container syntax, a different firmware component size, a different layout, different container headers.

6. The device of any preceding Claim wherein the at least one processor is configured to read a boot image header from one of: a processor-specific address, a fused-startup address and in response thereto identify at least one of: the at least one first section of the boot image, the at least one second section of the boot image.

7. The device of Claim 6 wherein the at least one processor is configured to load firmware from a non-volatile memory, NVM, as part of an entire contiguous program image according to the read boot image header.

8. The device of Claim 7 when dependent upon Claim 2, wherein at least one processor is configured to identify (745) that the loaded firmware from NVM has been executed successfully, and in response thereto execute the shared operating system.

9. The device of any of preceding Claims 2 to 8, wherein the at least one processor is configured to authenticate data selected and read in the at least one first section of the boot image.

10. The device of any of preceding Claims 2 to 9, wherein a plurality of container headers point to a same shared operating system, OS, within the boot image (300, 400, 500).

11. The device of any preceding Claim, wherein when the boot image is run by the at least one processor of the multiple processors in a streaming mode.

12. The device of Claim 11, wherein the at least one first section of the boot image that is marked as data is authenticated.

13. A method (600) for creating a multiple processor boot image, the method comprising:
creating (610) a container header for multiple processors;
adding (615, 620) at least one firmware for a plurality of processors of the multiple processors to the container header;
adding (625) an alignment gap to a processor address for the plurality of processors of the multiple processors;
adding (635) at least one shared operating system, wherein at least one shared operating system is arranged to be read by the plurality of processors; and
storing (655) the multiple processor boot image.

14. The method (600) of Claim 13 further comprising:
authenticating (640) the at least one shared operating system image and shared operating system, OS; and
storing a signed multiple processor boot image.

15. The method (600) of Claim 14 further comprising:
updating a container header of at least one processor; and
adding non-processor parts as data; and
signing (645) the non-processor parts including a processor container header.

## Amended claims

### Amended claims in accordance with Rule 137(2) EPC.

1. A device (301) comprises:
a contiguous boot image (300, 400, 500);
multiple processors (302) configured to run the contiguous boot image (300, 400, 500), wherein the contiguous boot image comprises at least one program image that is shared between the multiple processors;
a memory (330, 430, 530) coupled to the multiple processors and configured to store the contiguous boot image (300, 400, 500);
wherein at least one processor (302) of the multiple processors is configured to:
run the contiguous boot image in a streaming mode application where a contiguous sequence of several components is streamed to memory according to a contiguous boot image header; and
read the contiguous boot image header from a boot address where the contiguous boot image header identifies at least one first section and at least one second section of the contiguous boot image (300, 400, 500) and the at least one processor (302) selects the at least one first section of the boot image that is relevant to the at least one processor;
wherein contiguous boot image header data identifies at least part of the contiguous boot image that is intended for at least one other processor, and as the processor operates in the streaming mode application, the processor reads the identified second section, the second section being marked as data for that processor, and subsequently does not use the identified second section.

2. The device of Claim 1, wherein the contiguous boot image comprises at least one operating system (355, 455, 555) that is shared between the multiple processors.

3. The device of Claim 2, wherein the contiguous boot image comprises a container header allocated for the multiple processors and configured to:
identify the at least one first section of the contiguous boot image according to a revision of the at least one processor; and
provide in the at least one second section of the contiguous boot image a layout of subsequent binary data.

4. The device of any preceding Claim, wherein the contiguous boot image comprises, for the multiple processors, at least one of: a different container syntax, a different firmware component size, a different layout, different container headers.

5. The device of any preceding Claim wherein the at least one processor is configured to read a contiguous boot image header from a processor-specific address.

6. The device of Claim 5 wherein the at least one processor is configured to load firmware from a non-volatile memory, NVM, as part of an entire contiguous program image according to the read contiguous boot image header.

7. The device of Claim 6, wherein at least one processor is configured to identify (745) that the loaded firmware from NVM has been executed successfully, and in response thereto execute the shared operating system.

8. The device of any preceding Claim, wherein the at least one processor is configured to authenticate data selected and read in the at least one first section of the contiguous boot image.

9. The device of any preceding Claim, wherein a plurality of container headers point to a same shared operating system, OS, within the contiguous boot image (300, 400, 500).

10. The device of Claim 1, wherein the at least one first section of the contiguous boot image that is marked as data is authenticated.
